# EUROPÄISCHE PATENTANMELDUNG

(11) **EP 2 065 898 A1**
(43) Veröffentlichungstag der Anmeldung: **03.06.2009**
(21) Anmeldenummer: 07023317.6
(22) Anmeldetag: 01.12.2007
(51) Int. Cl.: G21C 3/322

(54) **Brennelement für einen Siedewasserreaktor**

(71) Anmelder: AREVA NP GmbH, 91052 Erlangen (DE)
(72) Erfinder: Reinders, Rudi, 91058 Erlangen (DE); Wehle, Franz, 64380 Rossdorf (DE)
(74) Vertreter: Mörtel & Höfner

(57) **Zusammenfassung**

Brennelement (100) für einen Siedewasserreaktor mit einem Brennelementfuß (101), an den sich ein Bündel von Brennstäben (102) anschließt. Der Brennelementfuß (101) weist entlang seiner Mittenlängsachse (A) einen Strömungskanal (302) auf, der im Betrieb von einem Kühlwasserstrahl durchströmt ist. Der Brennelementfuß (101) umfasst ein Drosselelement (302) mit einem Prallkörper (303), welcher zentral in dem Strömungskanal (301) angeordnet ist, und einen Teil von dessen Querschnittsfläche überdeckt.

## Beschreibung

Die Erfindung betrifft ein Brennelement für einen Siedewasserreaktor mit einem Brennelementfuß, an den sich ein Bündel von Brennstäben anschließt. Der Brennelementfuß ist von einem Strömungskanal durchsetzt, der im Betrieb von Kühlwasser durchströmt ist. Ein derartiges Brennelement geht beispielsweise aus der DE 10 2004 016 263 B3 hervor.

Die Brennelemente im Inneren eines Siedewasserreaktors werden im Betrieb von ihrer Unterseite her mit Kühlwasser angeströmt. Der dem Brennelement zugeführte Kühlwasserstrom wird durch ein Blendensystem begrenzt. Ein Siedewasserreaktor weist eine Vielzahl von Blenden auf, die im Bereich des unteren Kerngitters fest in den Reaktorkern eingebaut sind. Der Druckverlust eines einzelnen Brennelementes ist also sowohl durch seine Bauform, als auch durch die Bauart der Blende bestimmt. Eine solche fest in den Reaktorkern eingebaute Blende soll im folgenden auch als Primärblende bezeichnet werden.

Üblicherweise ist ein Reaktorkern in drei Zonen mit verschieden großen Primärblenden zur Erzielung unterschiedlicher Druckverluste aufgeteilt. Die Massestromverteilung des Kühlwassers, welches den Reaktorkern im Betrieb durchströmt, ist im wesentlichen durch diese drei Zonen vorgegeben. Typischerweise befinden sich in einer zentralen Zone Primärblenden mit einem relativ großen Durchmesser. Der Durchmesser der Primärblenden nimmt in den Randzonen ab. Durch eine Aufteilung des Reaktorkerns in verschiedene Zonen kann erreicht werden, dass der Massestrom des Kühlwassers im Zentrum des Reaktorkerns hoch, und in den Randbereichen des Reaktorkerns vergleichsweise geringer ist.

Die Brennelemente eines Siedewasserreaktors weisen an ihrem unteren Ende einen Brennelementfuß auf, mit dem sie auf dem unteren Kerngitter des Reaktorkerns aufgesetzt sind. Der Brennelementfuß ist von einem Strömungskanal durchsetzt. Mit anderen Worten weist der Brennelementfuß einen sich in seiner Längsrichtung erstreckenden Durchbruch auf. Durch den Strömungskanal wird dem Brennelement Kühlwasser zugeführt. Der einem einzelnen Brennelement zugeführte Kühlwasserstrom ist jeweils durch die zugehörige Primärblende vorgegeben, die unterhalb des Brennelementfußes im Bereich des unteren Kerngitters montiert ist.

Um eine gewünschte Massestromverteilung des Kühlwassers in dem Reaktorkern einzustellen, müssen die Druckverluste der Brennelemente im Zusammenspiel mit den Druckverlusten der Primärblenden betrachtet werden. Dabei ist eine grobe Einstellung der Durchsatzverteilung durch die im Reaktor montierten Primärblenden vorgegeben. Die Festlegung des Druckverlusts des Brennelements - einschließlich Fuß - ergibt die Feinabstimmung der Durchsatzverteilung im Zusammenspiel mit der Primärblende. Der Druckverlust für die verschiedenen Kernzonen ergibt in der Regel einen hohen Durchsatz im Zentrum und geringere Durchsätze in den äußeren Zonen.

Beim Austausch eines Brennelementes, ebenso beim Austausch mehrerer Brennelemente, muss das neu eingesetzte Brennelement einen solchen Druckverlustbeiwert aufweisen, der in die Gesamtkonzeption des Reaktorkerns passt.

Eine Möglichkeit den Druckverlustbeiwert eines Brennelementes einzustellen besteht darin eine weitere Blende in den Brennelementfuß zu integrieren. Eine solche, in Richtung des Kühlwasserstroms hinter der kernseitigen Primärblende angeordnete weitere Blende wird im folgenden auch als Sekundärblende bezeichnet. Zur Einstellung des gewünschten Druckverlustes eines Brennelementes müssen die Primärblende und die Sekundärblende aufeinander abgestimmt werden. Die Primärblenden sind reaktorseitig fest mit dem unteren Kerngitter verbunden, eine Veränderung der Primärblende ist praktisch nicht, oder nur mit sehr großem technischen Aufwand durchführbar. Zur Abstimmung bleibt also nur eine Variation der Sekundärblende. Mit Hilfe der Sekundärblende kann der Druckverlustbeiwert des Brennelementes jedoch nur in einem sehr engen Bereich variiert werden.

Aufgabe der vorliegenden Erfindung ist es, ein Brennelement für einen Siedewasserreaktor mit einer alternativ ausgestalteten Sekundärblende anzugeben.

Die Aufgabe wird mit den in Anspruch 1 genannten Maßnahmen gelöst. Demnach wird ein Brennelement für einen Siedewasserreaktor angegeben, das einen Brennelementfuß aufweist, an den sich ein Bündel von Brennstäben anschließt. Der Brennelementfuß ist von einem Strömungskanal durchsetzt. Vorzugsweise erstreckt sich der Strömungskanal entlang einer Mittenlängsachse des Brennelementfußes. Der Strömungskanal ist im Betrieb des Kernreaktors von einem Kühlwasser durchströmt. Der Brennelementfuß umfasst ein Drosselelement, welches wiederum einen zentral in dem Strömungskanal angeordneten Prallkörper umfasst. Der Prallkörper überdeckt einen Teil der Querschnittsfläche des Strömungskanals.

Der vorliegenden Erfindung liegt die folgende Überlegung zu Grunde. Zur Einstellung des Druckverlustbeiwertes eines Brennelementes für einen Siedewasserreaktor wird in den Brennelementfuß ein Drosselelement integriert. Dieses Drosselelement umfasst als wesentliches Bauteil einen Prallkörper, der zentral in dem Strömungskanal angeordnet ist. Durch die zentrale Anordnung des Prallkörpers in dem Strömungskanal kann eine Wechselwirkung des Prallkörpers mit der Kühlwasserströmung erzwungen werden. Das in dem Strömungskanal vorliegende Geschwindigkeitsprofil der Kühlwasserströmung ist durch die entgegen der Strömungsrichtung, also in der Regel unterhalb des Brennelementfußes angeordnete Primärblende bestimmt. Durch die genannte Ausgestaltung des Drosselelements, das die Aufgabe einer Sekundärblende erfüllt, ist unabhängig von dem Durchmesser der kernseitig vorhandenen Primärblende sichergestellt, dass das Drosselelement mit dem Kühlwasserstrahl, der das Brennelement von der Unterseite her anströmt, in Wechselwirkung tritt. Unabhängig von dem Durchmesser der Primärblende kann mit dem erfindungsgemäßen Drosselelement ein für das jeweilige Brennelement passender Druckverlustbeiwert eingestellt werden. Der durch das Drosselelement einstellbare Druckverlustbeiwert des Brennelementes lässt sich, im Vergleich zu bekannten, mit Kreisblenden ausgestatteten Brennelementen, in einem wesentlich größeren Bereich variieren.

Vorteilhafte Ausgestaltungen des erfindungsgemäßen Brennelementes gehen aus den von Anspruch 1 abhängigen Ansprüchen hervor. Dabei kann die Ausführungsform nach Anspruch 1 mit den Merkmalen eines, vorzugsweise mit denen mehrerer Unteransprüche kombiniert werden. Demgemäß kann das Brennelement nach der Erfindung noch die folgenden Merkmale aufweisen:

Gemäß einer Ausgestaltung des Brennelementes weist das Drosselelement einen in den Strömungskanal hineinragenden Randbereich auf. Der Randbereich erstreckt sich in einer Ebene senkrecht zu einer Mittenlängsachse des Brennelementfußes, ragt radial in den Strömungskanal hinein und umschließt diesen vollumfänglich. Der Randbereich erlaubt es den Widerstandsbeiwert des Brennelementes in einem weiteren Bereich zu variieren, als dies ohne einen solchen Randbereich möglich wäre. Auf den Prallkörper auftreffendes Kühlwasser wird aus seiner ursprünglichen Fließrichtung abgelenkt. Diese quer zur ursprünglichen Fließrichtung des Kühlwassers gerichteten Strömungsanteile treffen auf den Randbereich, und werden durch diesen abgedrosselt. So kann durch eine Variation der Breite des Randbereiches des Drosselelementes der Widerstandsbeiwert des Brennelementes variiert werden.

Gemäß einer Weiterbildung des Brennelementes ist der Prallkörper von zumindest zwei, sich in einer Ebene senkrecht zu einer Mittenlängsachse des Brennelementfußes erstreckenden, in Umfangsrichtung regelmäßig angeordneten Stegen gehalten. Die Halterung des Prallkörpers durch Stege hat neben Stabilitätsgesichtspunkten den Vorteil einen weiteren Parameter zur flexiblen Einstellung des Druckverlustbeiwerts zu liefern.

Zur Feinjustage des Druckverlustes des Brennelementes sind, gemäß einer weiteren Ausführungsform, die Übergangsbereiche zwischen dem Randbereich und den Stegen sowie zwischen den Stegen und dem Prallkörper so ausgestaltet, dass der Randbereich, die Stege und der Prallkörper in einer Ebene senkrecht zu einer Mittenlängsachse des Brennelementfußes jeweils zumindest drei, sich in Umfangsrichtung des Drosselelements erstreckende, gekrümmte Durchbrüche ausbilden. Die Ecken der Durchbrüche sind kreissegmentartig abgerundet. Durch die vorgenannte Ausgestaltung des Drosselelementes wird eine einfache Möglichkeit zur Feinjustage des Widerstandsbeiwertes des Brennelementes angegeben. So kann der Widerstandsbeiwert nicht nur durch die Breite des Randbereiches, sondern auch durch die Form, Anzahl und Breite der Stege variiert werden. Die Ausgestaltung der Übergangsbereiche zwischen den Stegen und dem Rand einerseits und den Stegen und dem Prallkörper andererseits erlaubt eine zusätzliche Feinjustage. Dabei können diese Übergangsbereiche nicht nur kreissegmentartig, also abgerundet ausgestaltet sein. Es ist ebenso möglich die Durchbrüche eckig auszugestalten.

Zur weiteren Feinjustage des Druckverlustes des Drosselelementes, sind gemäß einer weiteren vorteilhaften Ausführungsform die in Kontakt mit dem Kühlwasserstrahl stehenden Kanten des Drosselelementes scharfkantig, angephast oder abgerundet. Indem eine oder mehrere Kanten des Drosselelementes wahlweise besonders scharf oder bewusst abgerundet ausgestaltet werden, kann der Widerstandsbeiwert der entsprechenden Bauteile entweder geringfügig erhöht oder geringfügig herabgesetzt werden. Solche Maßnahmen erlauben eine weitere Feinjustage des Widerstandsbeiwertes des Drosselelementes.

Gemäß einer Ausführungsform ist der Prallkörper scheibenförmig ausgestaltet. Die Oberflächennormale des Prallkörpers ist vorzugsweise entlang der Mittenlängsachse des Brennelementfußes ausgerichtet. Nach einer Weiterbildung ist der Prallkörper als eine kreisförmige Scheibe ausgebildet.Ein scheibenförmiger Prallkörper ist fertigungstechnisch einfach herzustellen. Durch die Orientierung der Oberflächennormale des Prallkörpers gegenüber der in dem Strömungskanal vorliegenden Strömungsrichtung kann der Widerstand des Drosselelementes eingestellt werden. Bei senkrechter Stellung, also wenn die Oberflächennormale parallel zu der Mittenlängsachse orientiert ist, kann der Widerstand des Drosselelementes durch den Radius des Prallkörpers eingestellt werden, wenn dieser als eine kreisförmige Scheibe ausgebildet ist.

Der Prallkörper ist, gemäß einer vorteilhaften Ausführungsform, als eine Lochscheibe ausgebildet. Nach einer Weiterbildung weist die Lochscheibe einen zentralen Durchbruch auf. Eine Lochscheibe als Prallkörper erlaubt eine Feinjustage des Widerstandes des Drosselelementes. Mit Hilfe eines zentralen Durchbruches kann eine weitere Feinjustage des Widerstandes des Prallkörpers vorgenommen werden. Ein zentraler Durchbruch ist besonders vorteilhaft, da der zentrale Bereich des Prallkörpers stets mit dem Kühlwasserstrahl in Wechselwirkung tritt. Ein zentraler Durchbruch birgt darüber hinaus fertigungstechnische Vorteile.

Weitere vorteilhafte Ausgestaltungen des erfindungsgemäßen Brennelementes gehen aus den vorstehend nicht angesprochenen Ansprüchen sowie insbesondere aus der nachfolgend erläuterten Zeichnung hervor. In der Zeichnung sind Ausführungsbeispiele des erfindungemäßen Brennelementes in schematisierter Darstellung angedeutet. Dabei zeigen deren
Figur 1 ein Brennelement,
Figur 2 einen Ausschnitt des unteren Kerngitters,
Figur 3 und 5 jeweils einen Brennelementfuß mit einem Drosselelement im Längsschnitt und
Figur 4 und 6 jeweils ein Drosselelement in Draufsicht.

Sich in der Zeichnung entsprechende Bauteile sind mit den gleichen Bezugszeichen versehen, weitere in der Zeichnung nicht explizit erläuterte Bauteile sind allgemein bekannter Stand der Technik.

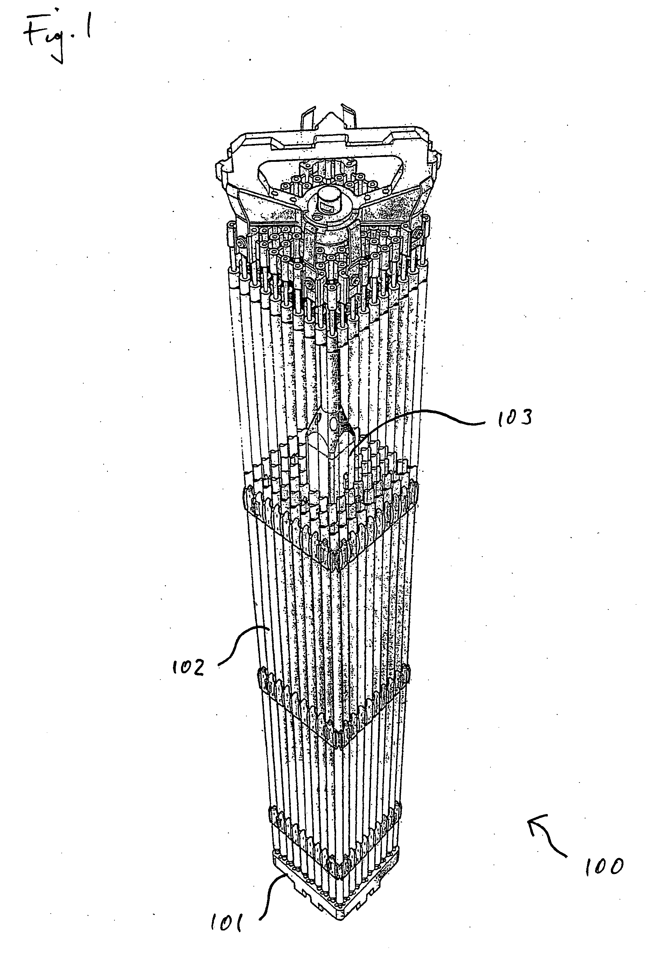

Figur 1 zeigt ein Brennelement 100 für einen Siedewasserreaktor mit einem Brennelementfuß 101, an welchen sich oberhalb ein Bündel von Brennstäben 102 anschließt. Das Bündel von Brennstäben 102 umschließt zumindest teilweise einen Wasserkanal 103. Ein Wasserkanal 103 ist indes nicht zwingend erforderlich, es sind ebenfalls Brennelemente denkbar, die keinen Wasserkanal 103 aufweisen. Während des Betriebs des Brennelementes 100 wird dieses von der Unterseite her von Kühlwasser durchströmt.

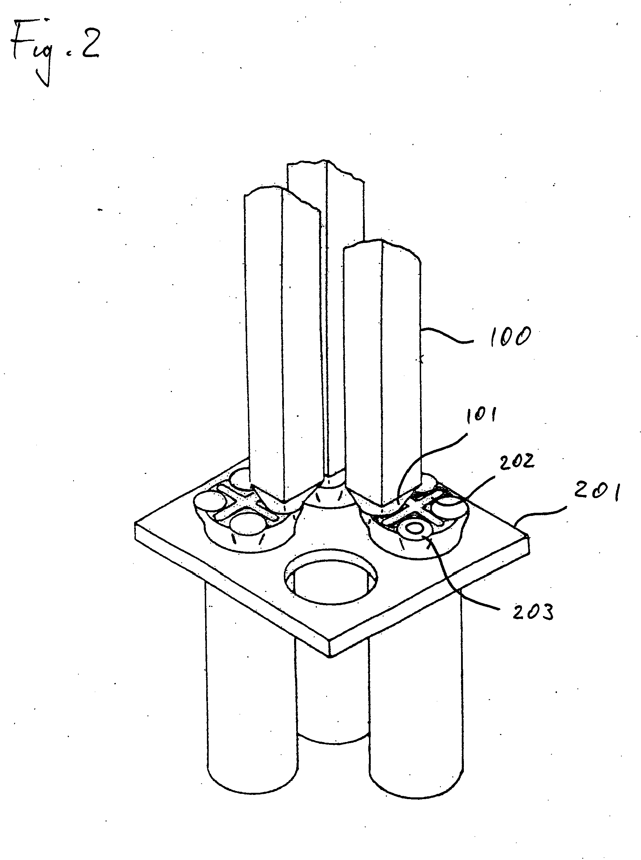

Figur 2 zeigt einen Bereich des unteren Kerngitters 201. Eine Anzahl von Brennelementen 100 ist jeweils mit ihrem Brennelementfuß 101 oberhalb einer Primärblende 203 angeordnet. Jeweils vier Brennelemente 100 sind zu einer Einheit zusammengefasst, in deren Mitte sich ein Steuerstab 202 befindet. Die Brennelemente 100 werden von ihrer Unterseite her, durch die Primärblende 203, von einem Kühlwasserstrom, bzw. Kühlwasserstrahl angeströmt.

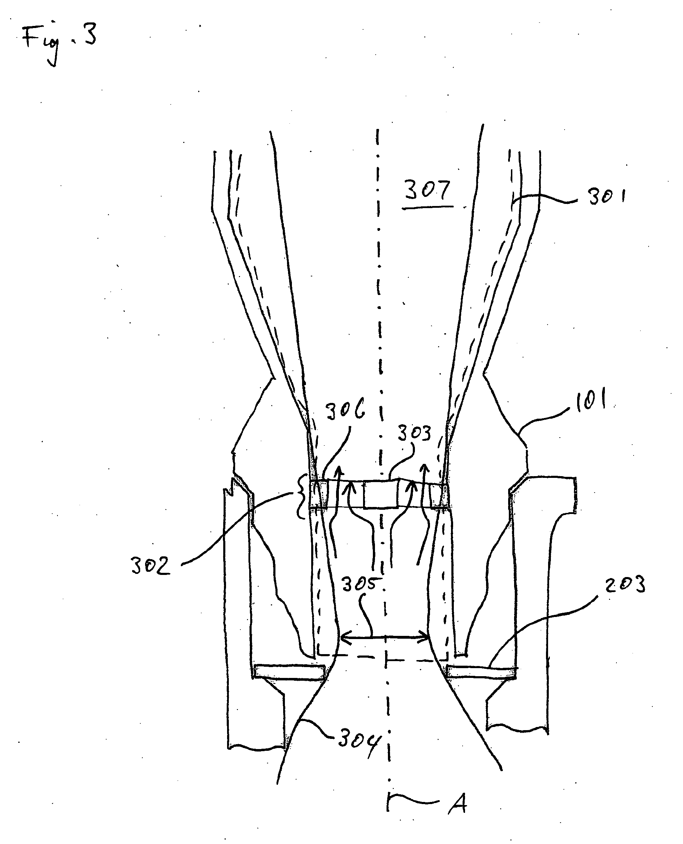

Figur 3 zeigt einen Längsschnitt durch ein Brennelement 100 im Bereich des Brennelementfußes 101. Der Brennelementfuß 101 ist entlang seiner Mittenlängsachse A von einem Strömungskanal 301 durchsetzt. Alternativ und abweichend von dem in Figur 3 gezeigten Ausführungsbeispiel kann der Strömungskanal 301 den Brennelementfuß 101 nicht zentral durchgreifen, sondern gegenüber der Mittellängsachse A in radialer Richtung versetzt sein. In dem Strömungskanal 301 ist ein Drosselelement 302 angeordnet, welches mit dem Brennelementfuß 101 fest verbunden ist. Das Drosselelement 302 umfasst einen zentral in dem Strömungskanal 301 angeordneten Prallkörper 303 sowie einen Randbereich 306, welcher am radial äußeren Rand des Strömungskanals 301 angeordnet ist.

Es sei nun zunächst hypothetisch angenommenen, dass die in Strahlrichtung betrachtet oberhalb der Primärblende 203 liegenden Bauteile nicht vorhanden sind. Das die Primärblende 203 anströmende Kühlwasser bildet in diesem Fall einen Freistrahl aus. Dieser hypothetisch angenommene Freistrahl würde, im Querschnitt betrachtet, in etwa durch die Stromlinien 304 begrenzt. Aus hydromechanischen Gründen bildet sich oberhalb der Primärblende 203 eine Vena Contracta 305 aus. Diese Einschnürung ist derjenige Ort, an dem der angenommene Freistrahl den geringsten Querschnitt aufweist. Gemäß dem in Figur 3 gezeigten Ausführungsbeispiel liegt die Vena Contracta 305 zwischen der Primärblende 203 und der Sekundärblende 302.

Der von den begrenzenden Stromlinien 304 umschlossene Bereich sei im folgenden allgemein als Freistrahlbereich 307 bezeichnet. Es handelt sich dabei um einen theoretischen Bereich, der unter den oben genannten Voraussetzungen von einem Freistrahl eingenommen würde. Der Freistrahlbereich 307 dient zur Verdeutlichung der erfindungsgemäßen Wirkung des Drosselelementes 302. Unter realen Einsatzbedingungen eines Brennelementfußes 101, wie ihn Figur 3 zeigt werden auch diejenigen Bereiche im Inneren des Brennelementfußes 101, die außerhalb des Freistrahlbereiches 307 liegen, in der Regel mit Kühlwasser gefüllt sein. Normalerweise wird das Kühlwasser jedoch in dem Freistrahlbereich 307 eine höhere Strömungsgeschwindigkeit aufweisen.
Das in Figur 3 gezeigte Drosselelement 302 weist einen zentral angeordneten Prallkörper 303 auf, welcher in dem Freistrahlbereich 307 mit dem Kühlwasser in Wechselwirkung tritt. Der Prallkörper 303 wird von dem Kühlwasser umströmt, was in Figur 3 mit Pfeilen angedeutet ist. Neben dem Prallkörper 303 tritt auch der Randbereich 306 des Drosselelementes 302 mit dem Kühlwasserstrom in Wechselwirkung. Zum einen entstehen durch die Ablenkung des Kühlwassers an dem Prallkörper 303 Strömungskomponenten, die senkrecht zu der Mittellängsachse A gerichtet sind. Diese abgelenkten Teile der Strömung treten mit dem Randbereich 306 in Wechselwirkung. Zum anderen ist nach Figur 3 das Drosselelement 302 derart innerhalb des Brennelementfußes 101 angeordnet, so dass auch der Randbereich 306 innerhalb des Freistrahlbereiches 307 liegt. Der Kühlwasserstrom wird als nicht nur indirekt, sondern auch direkt durch den Randbereich 306 abgedrosselt.

Der Prallkörper 303 des Drosselelementes 302 kann, wie in Figur 3 dargestellt, im wesentlichen senkrecht zu der Mittenlängsachse A orientiert sein. Möglich sind jedoch auch Schrägstellungen des Prallkörpers 303 bezüglich der Mittenlängsachse A, wodurch der Widerstand des Prallkörpers 303 verändert werden kann. In einem solchen Fall schließt die Flächennormale des Prallkörpers 303 mit der Mittenlängsachse A einen spitzen Winkel ein.

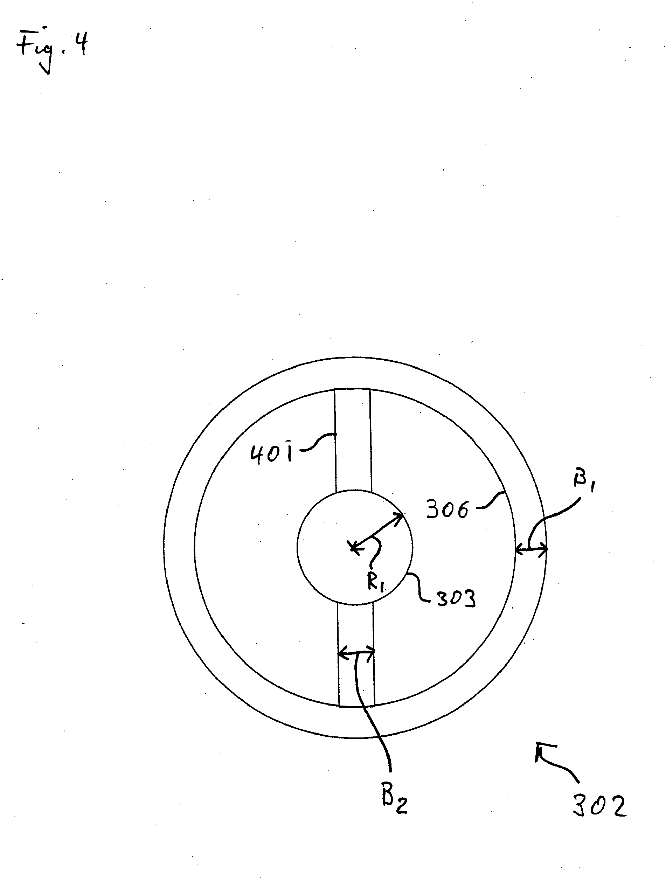

Figur 4 zeigt ein Ausführungsbeispiel für ein Drosselelement 302 in Draufsicht. Der Prallkörper 303 wird von zwei Stegen 401 in seiner Position gehalten. Außerdem ist der Prallkörper 303 als eine geschlossene, kreisförmige Platte ausgestaltet. Es kann sich jedoch bei dem Prallkörper 303 ebenso um eine Lochscheibe mit einem oder mehreren Durchbrüchen, beispielsweise nach der Art eines Siebes handeln. Für den Prallkörper 303 sind ebenfalls weitere geometrische Formen, wie beispielsweise Würfel, Quader, Tetraeder, Kugel etc. denkbar. Der Widerstandsbeiwert des Drosselelementes 302 ist durch die Größe der Querschnittsfläche, die der Prallkörper 303 in dem Strömungskanal 301 einnimmt, seine axiale Position im Strömungskanal 301 und durch seine geometrische Form bestimmt. Gemäß dem in Figur 4 gezeigten Ausführungsbeispiel wird die Querschnittsfläche des Prallkörpers 303 durch dessen Radius R₁ bestimmt.

Der Randbereich 306 umschließt das Drosselelement 302 vollumfänglich und weist eine Breite B₁ auf. Der Gesamtwiderstand des Drosselelementes 302 wird letztlich durch die Gesamtfläche, die sich aus der Breite B₁ des Randbereiches 306, der Breite B₂ der Stege 401 sowie dem Radius R₁ des Prallkörpers 303 ergibt, sowie die Form der jeweiligen Bauteile bestimmt. Das Drosselelement 302 kann beispielsweise aus Edelstahl oder einem anderen geeigneten Material gefertigt sein.

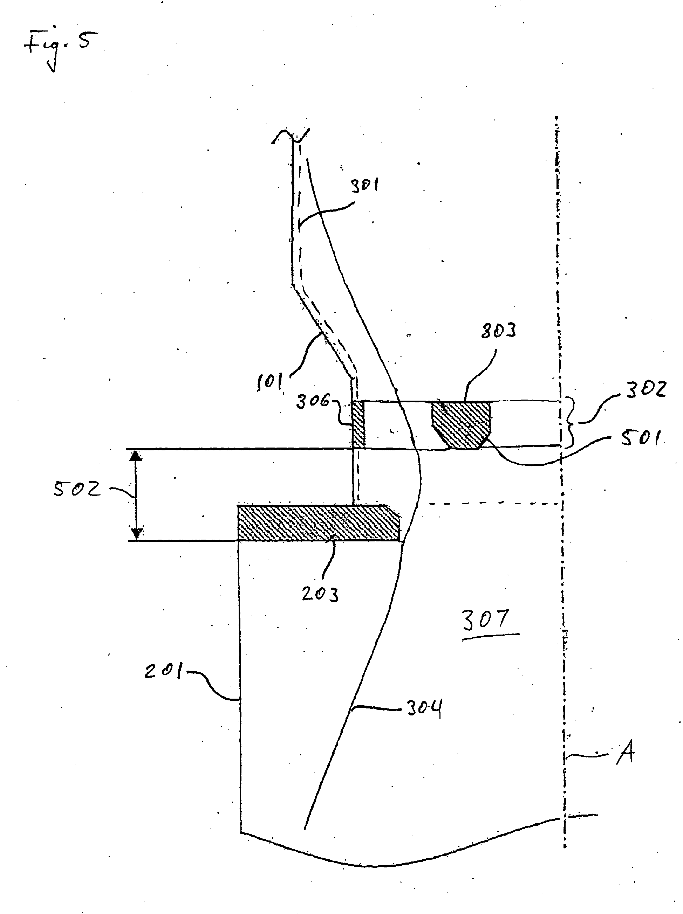

Figur 5 zeigt einen Brennelementfuß 101 sowie Teile des unteren Kerngitters 201 in einem Längsschnitt. Der von dem Kühlwasserstrahl angeströmte Brennelementfuß 101 weist ein Drosselelement 302 auf, das aus einem Randbereich 306 und einem ringförmigen Prallkörper 303 besteht. Die mit dem Kühlwasserstrom in Kontakt stehenden Kanten des Drosselelements 302, insbesondere die mit dem Kühlwasserstrom in Kontakt stehenden Kanten des Prallkörpers 303 sind mit Phasen 501 versehen.

Indem Teile des Drosselelementes 302 angephast werden, kann der Widerstandsbeiwert des Drosselelementes 302 geringfügig herabgesetzt werden. Das gleiche wird beispielsweise durch Abrunden der Kanten des Drosselelementes 302 erreicht. Es kann ebenso wünschenswert sein die Kanten des Drosselelementes 302 besonders scharf auszugestalten, um einen definierten Strömungsabriss an den Kanten zu erzeugen. Die entstehenden Verwirbelungen führen zu einem leichten Anstieg des Widerstandsbeiwertes.

Wie bereits im Zusammenhang mit Figur 3 erläutert ist auch in Figur 5 ein Freistrahlbereich 307 angedeutet, der von den begrenzenden Stromlinien 304 umschlossen ist. Der Freistrahlbereich 307 ist durch die Größe der Primärblende 203 vorgegeben. In dem in Figur 5 gezeigten Ausführungsbeispiel ist die Primärblende 203 verhältnismäßig klein gewählt, wie es beispielsweise in der Peripherie eines Reaktorkerns der Fall sein kann. Im Vergleich dazu würde Figur 3 die Situation im Zentrum eines Reaktorkerns wiedergeben, denn dort ist die Primärblende 203 vergleichsweise groß gewählt. Durch die relativ kleine Primärblende 203 in Figur 5 wird der Freistrahlbereich 307 derart verengt, dass im wesentlichen der Prallkörper 303 und nicht der Randbereich 306 mit dem Kühlwasserstrahl in Wechselwirkung tritt. Der Randbereich 306 ist in diesem Fall, wie ebenfalls bereits erläutert, lediglich indirekt wirksam.

Die Primärblende 203 und das Drosselelement 302 sind in Richtung der Mittellängsachse A durch den Abstand 502 voneinander beabstandet. Ein weiterer sensibler Parameter zur Einstellung des Druckverlustbeiwertes des Brennelementes 100 ist der Abstand 502 zwischen der Primärblende 203 und dem Drosselelement 302.

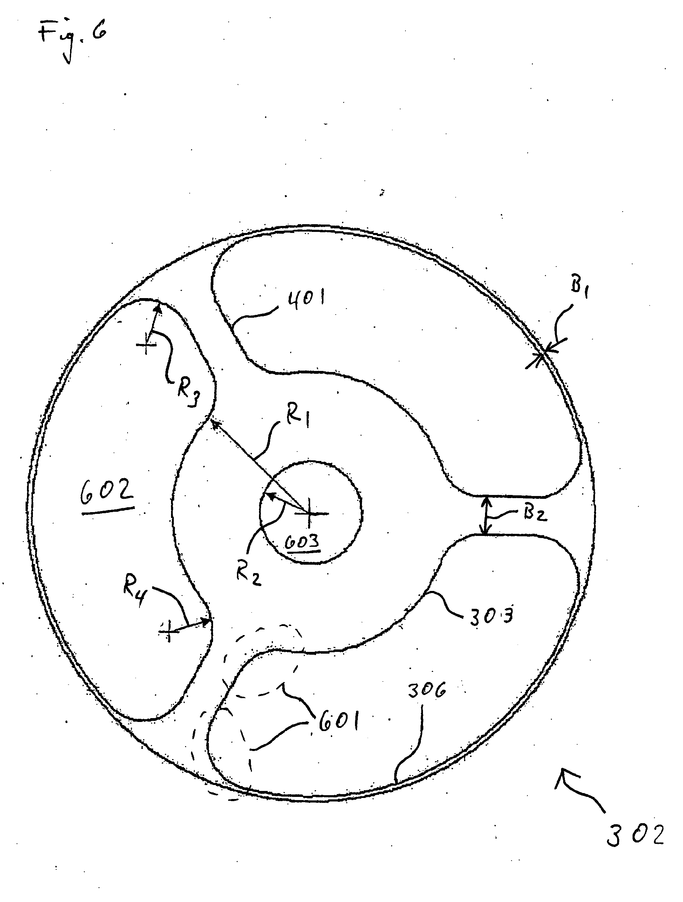

Ein Drosselelement 302, welches einen Prallkörpers 303 von der Art einer Ringscheibe aufweist, ist in Figur 6 in Draufsicht dargestellt. Das Drosselelement 302 weist einen Prallkörper 303 auf, der einen Außenradius R₁ und einen zentralen Durchbruch 603 mit dem Radius R₂ aufweist. Der Prallkörper 303 ist von Stegen 401 gehalten, welche mit dem Randbereich 306 verbunden sind. Der Randbereich 306 weist die Breite B₁ auf. Die Stege 401 weisen eine Breite B₂ auf.

Der Prallkörper 303 bildet gemeinsam mit den Stegen 401 und dem Randbereich 306 drei sich in Umfangsrichtung des Drosselelementes 302 erstreckende gekrümmte Durchbrüche 602 aus. Die Ecken der Durchbrüche 602 sind in den Übergangsbereichen 601 zwischen dem Prallkörper 303 und den Stegen 401 bzw. zwischen den Stegen 401 und dem Randbereich 306 kreissegmentartig abgerundet. Die Übergangsbereiche können dabei je nachdem ob es sich um einen Übergangsbereich zwischen dem Randbereich 306 und einem Steg 401 handelt, beispielsweise den Radius R₃ aufweisen und wenn es sich um einen Übergangsbereich 601 zwischen einem Steg 401 und dem Prallkörper 303 handelt, den Radius R₄ aufweisen. Die mit dem Kühlwasserstrahl in Kontakt stehenden Teile des Prallkörpers 302 können angephast, abgerundet oder scharfkantig sein.

### Bezugszeichenliste

- 100: Brennelement
- 101: Brennelementfuß
- 102: Brennstab
- 103: Wasserkanal
- 201: unteres Gitter des Reaktorkerns
- 202: Steuerstab
- 203: Primärblende
- 301: Strömungskanal
- 302: Drosselelement
- 303: Prallkörper
- 304: begrenzende Stromlinie
- 305: Vena Contracta
- 306: Randbereich
- 307: Freistrahlbereich
- 401: Stege
- 501: Phasen
- 502: Abstand
- 601: Übergangsbereiche
- 602: Durchbrüche
- 603: zentraler Durchbruch
- A: Mittenlängsachse des Brennelementfußes
- B₁: Breite des Randbereiches
- B₂: Breite der Stege
- R₁: Radius des Prallkörpers
- R₂: Radius des zentralen Durchbruchs
- P_{3,4}: Krümmungsradien der Übergangsbereiche

## Patentansprüche

1. Brennelement (100) für einen Siedewasserreaktor mit einem Brennelementfuß (101), an den sich ein Bündel von Brennstäben (102) anschließt, wobei der Brennelementfuß (101) von einem Strömungskanal (301) durchsetzt ist, der im Betrieb von Kühlwasser durchströmt ist,
**dadurch gekennzeichnet, dass**
der Brennelementfuß (101) ein Drosselelement (302) umfasst, das einen zentral in dem Strömungskanal (301) angeordneten, einen Teil von dessen Querschnittsfläche überdeckenden Prallkörper (303) aufweist.

2. Brennelement (100) nach Anspruch 1, **dadurch gekennzeichnet, dass** das Drosselelement (302) einen in den Strömungskanal (301) hineinragenden Randbereich (306) aufweist, der sich in einer Ebene senkrecht zu einer Mittenlängsachse (A) des Brennelementfußes (101) erstreckt, in den Strömungskanal (301) radial hineinragt, und diesen vollumfänglich umschließt.

3. Brennelement (100) nach einem der vorstehenden Ansprüche, **dadurch gekennzeichnet, dass** der Prallkörper (303) von zumindest zwei, sich in einer Ebene senkrecht zu einer Mittenlängsachse (A) des Brennelementfußes (101) erstreckenden, in Umfangsrichtung regelmäßig angeordneten Stegen (401) gehalten ist.

4. Brennelemente (100) nach den Ansprüchen 1 bis 3, **dadurch gekennzeichnet, dass** die Übergangsbereiche (601) zwischen dem Randbereich (306) und den Stegen (401) sowie den Stegen (401) und dem Prallkörper (304) derart ausgestaltet sind, dass der Randbereich (306), die Stege (401) und der Prallkörper (304), in einer Ebene senkrecht zur Mittenlängsachse (A) des Brennelementfußes (101), zumindest drei sich jeweils in Umfangsrichtung des Drosselelementes (302) erstreckende, gekrümmte Durchbrüche (602) ausbilden, deren Ecken kreissegmentartig abgerundet sind.

5. Brennelement (100) nach einem der vorstehenden Ansprüche, **gekennzeichnet durch** einen scheibenförmigen Prallkörper (303), dessen Oberflächennormale in Richtung einer Mittenlängsachse (A) des Brennelementfußes (101) ausgerichtet ist.

6. Brennelement (100) nach Anspruch 5, **gekennzeichnet durch** einen Prallkörper (303) von der Form einer Kreisscheibe.

7. Brennelement (100) nach einem der vorstehenden Ansprüche, **gekennzeichnet durch** eine Lochscheibe als Prallkörper (303).

8. Brennelement (100) nach Anspruch 7, **dadurch gekennzeichnet, dass** die Lochscheibe einen einzelnen zentralen Durchbruch (603) aufweist.

9. Brennelement (100) nach einem der vorstehenden Ansprüche, **dadurch gekennzeichnet, dass** die mit dem Kühlwasser in Kontakt stehenden Kanten des Drosselelementes (302) scharfkantig, angephast oder abgerundet sind.
